(19) **Europäisches Patentamt**
**European Patent Office**
**Office européen des brevets**

(11) **EP 4 348 824 B1**

(12) **EUROPÄISCHE PATENTSCHRIFT**

(45) Veröffentlichungstag und Bekanntmachung des Hinweises auf die Patenterteilung:
**04.02.2026 Patentblatt 2026/06**

(21) Anmeldenummer: **22729483.2**

(22) Anmeldetag: **13.05.2022**

(51) Internationale Patentklassifikation (IPC):
*H02P 6/18* (2016.01)

(52) Gemeinsame Patentklassifikation (CPC):
**H02P 6/183**

(86) Internationale Anmeldenummer:
**PCT/EP2022/063013**

(87) Internationale Veröffentlichungsnummer:
**WO 2022/253552 (08.12.2022 Gazette 2022/49)**

(54) **VERFAHREN UND VORRICHTUNG ZUM REGELN EINER ELEKTRISCHEN MASCHINE**

METHOD AND DEVICE FOR CONTROLLING AN ELECTRIC MACHINE

PROCÉDÉ ET DISPOSITIF POUR RÉGULER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2021 DE 102021205649**

(43) Veröffentlichungstag der Anmeldung:
**10.04.2024 Patentblatt 2024/15**

(73) Patentinhaber: **VOLKSWAGEN AKTIENGESELLSCHAFT**
**38440 Wolfsburg (DE)**

(72) Erfinder: **WEBER, Bastian**
**30161 Hannover (DE)**

(56) Entgegenhaltungen:
**EP-A1- 2 538 547          DE-A1- 102016 201 746**
**US-A1- 2020 099 323**

- LINDEMANN GEORG ET AL: "Reducing the Low-Speed Limit for Back-EMF Based Self-Sensing Speed Control by Using an FPGA-Operated Dead-Time Compensation", 2018 IEEE 9TH INTERNATIONAL SYMPOSIUM ON SENSORLESS CONTROL FOR ELECTRICAL DRIVES (SLED), IEEE, 13 September 2018 (2018-09-13), pages 60 - 65, XP033417488, DOI: 10.1109/SLED.2018.8485822

## Beschreibung

Die Erfindung betrifft ein Verfahren und eine Vorrichtung zum Regeln einer elektrischen Maschine.

Bei einer drehgeberlosen Regelung erfolgt eine Regelung einer elektrischen Maschine, ohne dass eine Rotorlage mittels eines Rotorlagewinkelsensors oder einer anderen Sensorik erfasst wird. Die drehgeberlose Regelung von permanentmagneterregten Synchronmaschinen (PMSM) basiert hierbei auf zwei unterschiedlichen Wirkprinzipien, welche abhängig von einer Drehzahl der elektrischen Maschine gewählt werden. Im Bereich höherer Drehzahlen wird eine Gegenspannung der elektrischen Maschine ausgewertet, welche durch eine Rotation der Permanentmagnete hervorgerufen wird. Die Gegenspannung nimmt mit der Drehzahl jedoch ab und ist somit im Bereich kleinerer Drehzahlen bzw. bei einer Drehzahl von Null nicht verfügbar. Im Bereich kleinerer Drehzahlen wird daher stattdessen eine Lageabhängigkeit der Induktivitätsmatrix der elektrischen Maschine ausgewertet. Um eine ausreichende Signalintensität zu erreichen, kann eine hochfrequente Spannungsanregung mit einer Auswertung der resultierenden hochfrequenten Stromantwort vorgesehen sein. Diese hochfrequente Spannungsanregung hat jedoch den Nachteil, dass in der elektrischen Maschine Hochfrequenzverluste entstehen, welche vorwiegend durch Wirbelstromverluste im Rotor und im Stator gekennzeichnet sind. Dies führt zu einer ungewollten Erwärmung der elektrischen Maschine, insbesondere des Rotors. Der Rotor lässt sich nur indirekt kühlen und ein erwärmter Rotor bedeutet in der Regel, dass eine Dauerleistung des Antriebssystems (zumindest für einen Zeitraum) reduziert werden muss. Des Weiteren kann durch die hochfrequente Anregung für Menschen und Tiere eine ungewünschte und störende Geräuschentwicklung aus dem Antriebssystem resultieren.

Die US 2020 / 0 099 323 A1 beschreibt ein sensorloses System und Verfahren zur Positionsschätzung und -steuerung für einen Permanentmagnet-Elektromotor eines Antriebssystems eines Fahrzeugs. Dieses umfasst das Bestimmen eines vom Elektromotor zu erreichenden Referenzdrehmoments basierend auf einem Satz von Fahrzeugbetriebsparametern, das Bestimmen einer Referenzstromstärke zum Erreichen des bestimmten Referenzdrehmoments unter Verwendung einer Nachschlagetabelle, das Bestimmen von Strombefehlen für den Elektromotor basierend auf der bestimmten Referenzstromstärke und einem festen Referenzstromwinkel, das Einspeisen einer Hochfrequenzspannung in eine Spannungssteuerschleife für den Elektromotor und das anschließende Schätzen einer Position eines Rotors des Elektromotors durch den Controller sowie das Steuern eines dem Elektromotor bereitgestellten Stroms basierend auf den bestimmten Strombefehlen und der geschätzten Rotorposition.

Aus G. Lindemann et al., Reducing the Low-Speed Limit for Back-EMF Based Self-Sensing Speed Control by Using an FPGA-Operated Dead-Time Compensation, 2018 IEEE 9th International Symposium on Sensorless Control for Electrical Drives (SLED), September 2018, DOI:10.1109/SLED.2018.8485822, ist eine Totzeitkompensation bekannt.

Die DE 10 2016 201 746 A1 beschreibt ein Verfahren zum Bestimmen eines Rotorwinkels eines Rotors einer Elektromaschine, aufweisend die Schritte Erzeugen eines drehmomentabhängigen Testsignals, welches von dem Drehmoment der Elektromaschine abhängt und eine höhere Frequenz aufweist, als ein Versorgungssignal für die Elektromaschine, Ansteuern der Elektromaschine mit dem Versorgungssignal und dem Testsignal, welches dem Versorgungssignal überlagert wird, Erfassen von Phasenströmen der Elektromaschine, und Bestimmen des Rotorwinkels des Rotors der Elektromaschine basierend auf den Auswirkungen des Testsignals auf die Phasenströme. Ferner offenbart die vorliegende Erfindung eine Winkelbestimmungsvorrichtung und eine entsprechende Steuervorrichtung.

Die EP 2 538 547 A1 beschreibt ein Verfahren zur geberlosen Identifikation mechanischer Kenngrößen, insbesondere der Masse, eines Linear-Asynchronmotors zumindest umfassend die Schritte: Konstantspannungsein-prägung in $\alpha$-Achsenrichtung zur Erzeugung eines Konstantmagnetflusses; Testsignalspannungseinspeisung in $\beta$-Achsenrichtung des Linear-Asynchronmotors, wobei die $\alpha$-Achsenrichtung konstant bestromt bleibt; Meßsignalstrom-messung in $\beta$-Primärteilachsenrichtung des Linear-Asynchronmotors; Identifikation von mechanischen Kenngrößen des Linear-Asynchronmotors auf Basis der Testsignalspannung und des Meßsignalstroms; wobei die Testsignaleinspeisung in den Asynchronmotor derart erfolgt, dass das Sekundärteil aufgrund der Testsignaleinspeisung Auslenkungsbewegungen ausführen kann.

Aus B. Weber, T. Brandt and A. Mertens, Compensation of switching dead-time effects in voltage-fed PWM inverters using FPGA-based current oversampling, 2016 IEEE Applied Power Electronics Conference and Exposition (APEC), Long Beach, CA, USA, 2016, S. 3172-3179, doi: 10.1109/APEC.2016.7468318, ist ein Verfahren zur Totzeitkompensation bekannt.

Aus Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, 163 S., https://doi.org/10.15488/9140, ist ein Verfahren zum Schätzen einer Rotorlage und/oder einer Rotordrehzahl bekannt.

Der Erfindung liegt die Aufgabe zu Grunde, ein Verfahren und eine Vorrichtung zum Regeln einer elektrischen Maschine zu verbessern, um insbesondere Hochfrequenzverluste zu verringern.

Die Aufgabe wird erfindungsgemäß durch ein Verfahren mit den Merkmalen des Patentanspruchs 1 und eine Vorrichtung mit den Merkmalen des Patentanspruchs 9 gelöst. Vorteilhafte Ausgestaltungen der Erfindung ergeben sich aus den Unteransprüchen.

Insbesondere wird ein Verfahren zum Regeln einer elektrischen Maschine zur Verfügung gestellt, wobei die elektrische Maschine mittels eines Wechselrichters gespeist und mittels einer drehgeberlosen Regelung geregelt wird, wobei hierzu Strangströme hochfrequent erfasst werden, und wobei Strangspannungen hochfrequent geschätzt werden, wobei, insbesondere in einem unteren Drehzahlbereich der elektrischen Maschine, zum Bestimmen einer für die Regelung benötigten Rotorlage der elektrischen Maschine ein hochfrequentes Testsignal aufgeprägt und eine Systemantwort ausgewertet wird, wobei ein vorgegebenes Solldrehmoment empfangen und ausgewertet wird, und wobei das hochfrequente Testsignal abgeschaltet wird, wenn das vorgegebene Solldrehmoment einen vorgegebenen Schwellenwert erreicht oder unterschreitet, und wobei das hochfrequente Testsignal eingeschaltet wird, wenn das vorgegebene Solldrehmoment den vorgegebenen Schwellenwert überschreitet.

Ferner wird insbesondere eine Vorrichtung zum Regeln einer elektrischen Maschine geschaffen, umfassend eine Steuereinrichtung, wobei die Steuereinrichtung dazu eingerichtet ist, einen die elektrische Maschine speisenden Wechselrichter anzusteuern und die elektrische Maschine mittels einer drehgeberlosen Regelung zu regeln und hierzu hochfrequent erfasste Strangströme zu empfangen und Strangspannungen hochfrequent zu schätzen, und, insbesondere in einem unteren Drehzahlbereich der elektrischen Maschine, zum Bestimmen einer für die Regelung benötigten Rotorlage der elektrischen Maschine ein hochfrequentes Testsignal aufzuprägen und eine Systemantwort auszuwerten; ferner ist die Steuereinrichtung dazu eingerichtet, ein vorgegebenes Solldrehmoment zu empfangen und auszuwerten, und das hochfrequente Testsignal abzuschalten, wenn das vorgegebene Solldrehmoment einen vorgegebenen Schwellenwert erreicht oder unterschreitet, und das hochfrequente Testsignal einzuschalten, wenn das vorgegebene Solldrehmoment den vorgegebenen Schwellenwert überschreitet.

Das Verfahren und die Vorrichtung ermöglichen es, eine Verlustleistung, die durch das Einprägen des hochfrequenten Testsignals hervorgerufen wird, zu reduzieren. Ferner kann auch eine Geräuschentwicklung reduziert werden. Hierzu ist vorgesehen, das hochfrequente Testsignal insbesondere nur dann aufzuprägen, wenn ein vorgegebenes Solldrehmoment einen vorgegebenen Schwellenwert überschreitet. Erreicht oder unterschreitet das vorgegebene Solldrehmoment hingegen den vorgegebenen Schwellenwert, so wird das hochfrequente Testsignal abgeschaltet. Anders ausgedrückt wird das hochfrequente Testsignal nur aufgeprägt, wenn ein von einem Fahrer oder einer Fahrzeugsteuerung eines teilautomatisierten oder automatisierten Fahrzeugs angefordertes Solldrehmoment den vorgegebenen Schwellenwert überschreitet. In einem einfachen Beispiel ist der vorgegebene Schwellenwert gleich Null, sodass nur bei einem vorgegebenen Solldrehmoment größer Null das hochfrequente Testsignal eingeschaltet wird. Wenn das hochfrequente Testsignal abgeschaltet ist, können hierdurch weder eine Verlustleistung entstehen, noch Geräusche erzeugt werden.

Das hochfrequente Testsignal wird hierbei insbesondere in eine d-Achse aufgeprägt, sodass alle Stränge der elektrischen Maschine angeregt werden. Es wird hierzu angemerkt, dass die d-Achse hierbei insbesondere stets eine im Rahmen der geberlosen Regelung geschätzte d-Achse ist.

Die Strangströme werden insbesondere mittels einer hierfür geeigneten Sensorik, insbesondere mittels Stromsensoren, an Strängen der elektrischen Maschine erfasst und in Form eines entsprechenden Signals bereitgestellt. Die hochfrequent erfassten Strangströme können insbesondere dazu verwendet werden, zu einer mittensynchronen Abtastung äquivalente Werte der Ausgangsströme bzw. Strangströme zu erzeugen. Das hochfrequente Erfassen der Strangströme bedeutet insbesondere, dass die Ströme überabgetastet erfasst werden. Insbesondere bedeutet dies, dass eine Frequenz der Abtastung deutlich größer ist als eine Modulationsfrequenz des Wechselrichters, insbesondere um einen Faktor 10, 100 oder 1000 größer. Durch das hochaufgelöste Erfassen kann insbesondere ein Rauschen in den äquivalenten Werten verbessert herausgefiltert werden, sodass insbesondere ein Signal-zu-Rauschverhältnis verbessert werden kann.

Die Rotorlage ist insbesondere ein (elektrischer) Rotorlagewinkel. Der Wechselrichter ist insbesondere ein Pulswechselrichter.

Die Steuereinrichtung kann einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) oder feldprogrammierbares Gatterfeld (FPGA) ausgebildet sind. Die Steuereinrichtung umfasst insbesondere mindestens eine Recheneinrichtung und mindestens einen Speicher.

Es ist insbesondere vorgesehen, dass die hochfrequent erfassten, insbesondere überabgetasteten, Ströme, und gegebenenfalls auch andere Größen, mittels eines feldprogrammierbaren Gatterfeldes (FPGA) ausgewertet werden. Ein feldprogrammierbares Gatterfeld ermöglicht eine hochfrequente Signalerfassung und Signalverarbeitung. Hochfrequent soll hierbei insbesondere bedeuten, dass ein zugehöriger Frequenzbereich oberhalb einer Modulationsfrequenz einer Pulsdauermodulation des (Puls-)Wechselrichters liegt. Insbesondere bezeichnet hochfrequent eine um einen Faktor 10, bevorzugt um einen Faktor 100, besonders bevorzugt um einen Faktor 1000 größere Frequenz im Vergleich zu der Modulationsfrequenz. Ist eine Modulationsfrequenz beispielsweise 20 kHz, so ist eine Frequenz der Signalerfassung und Signalverarbeitung des feldprogrammierbaren Gatterfeldes beispielsweise 1 MHz. Durch die parallele Signalverarbeitung eines feldprogrammierbaren Gatterfeldes kann dieses mit Vorteil hochfrequent (insbesondere ~MHz) abgetastete Größen verarbeiten. Durch die hochfrequente Abtastung lassen sich Abtast- bzw. Aliasing-Effekte als Störgrößen im Signal reduzieren. Eventuelle Rauschanteile der Sensorik können im feldprogrammierbaren Gatterfeld digital gefiltert werden, sodass ein sehr großes Signal-zu-Rausch-Verhältnis für die digitale Weiterverarbeitung bereitgestellt werden kann. Im Vergleich dazu ist ein Mikrocontroller (z.B. DSP) deutlich weniger geeignet, um hochfrequente Signale zu verarbeiten, da die erfassten Werte des DSP jeweils vom erfassenden internen Analog-Digital-Wandler (ADC) zum Prozessorkern transportiert und verarbeitet werden müssen, was zu signallaufzeitbedingten und vorverarbeitungsbedingten Verzögerungen beim Auswerten führt. Bei einem feldprogrammierbaren Gatterfeld stehen die erfassten Werte des ADC den Logikeinheiten stattdessen unmittelbar, das heißt in Echtzeit, zur Verfügung. Auch können mit feldprogrammierbaren Gatterfeldern kostengünstige ADCs ohne weitere Maßnahmen ausgewertet werden, welche einen hochfrequenten digitalen Datenstrom (Bitstrom) erzeugen können, z.B. Delta-Sigma-Wandler. Das feldprogrammierbare Gatterfeld ist insbesondere Teil eines System-on-Chip (SoC).

Das feldprogrammierbare Gatterfeld kann insbesondere ein zur Laufzeit partiell (d.h. teilweise) umkonfigurierbares feldprogrammierbares Gatterfeld sein. Hierdurch ist das feldprogrammierbare Gatterfeld insbesondere updatefähig. Das Umkonfigurieren erfolgt insbesondere im Wege der partiellen Umkonfiguration, bei der nur ein Teil des Gatterfeldes zur Laufzeit umkonfiguriert bzw. umprogrammiert wird, andere Teile des Gatterfeldes jedoch ihre jeweilige Konfiguration bzw. Programmierung beibehalten. Das Umkonfigurieren wird insbesondere mittels einer Konfigurationssteuerung durchgeführt, welche das Umkonfigurieren durchführt und überwacht. Die Konfigurationssteuerung kann mittels eines DSPs oder der Steuereinrichtung der Vorrichtung bereitgestellt werden. Zum Umkonfigurieren des mindestens einen feldprogrammierbaren Gatterfelds können insbesondere Verfahren zur automatischen Codegenerierung eingesetzt werden, wie beispielsweise der "Xilinx System Generator for DSP", welcher sowohl eine Quellcode-Modellierung als auch eine Funktionsanalyse automatisiert durchführen kann. Der "System Generator for DSP" ermöglicht beispielsweise die Modellierung von FPGA-Funktionen in einer Matlab Simulink-Umgebung, sodass die Eigenschaften gegenüber weiteren Simulink-Funktionsblöcken getestet werden können. Durch die automatische Codegenerierung kann sichergestellt werden, dass sich das feldprogrammierbare Gatterfeld identisch zur Simulink-Modellierung verhält. Eine Konfiguration eines feldprogrammierbaren Gatterfeldes umfasst insbesondere Anweisungen, mit denen das feldprogrammierbare Gatterfeld derart programmiert werden kann, dass mittels des programmierten (bzw. konfigurierten oder umkonfigurierten) Teils des feldprogrammierbaren Gatterfeldes eine bestimmte Funktionalität zur Datenverarbeitung bereitgestellt werden kann. Vorliegend umfasst eine solche Funktionalität insbesondere das Durchführen von Maßnahmen der in dieser Offenbarung beschriebenen Verfahren.

Nachfolgend wird das Bestimmen der Rotorlage näher erläutert. Die permanentmagneterregte Synchronmaschine lässt sich durch nachfolgende Statorspannungs-Differentialgleichungen in statorfesten $\alpha\beta$-Koordinaten modellieren:

$$\begin{pmatrix} u_\alpha \\ u_\beta \end{pmatrix} = R \cdot \begin{pmatrix} i_\alpha \\ i_\beta \end{pmatrix} + \frac{d}{dt}\left(\left(\Sigma L \begin{pmatrix} 1 & 0 \\ 0 & 1 \end{pmatrix} + \Delta L \begin{pmatrix} \cos(2\gamma_{el}) & \sin(2\gamma_{el}) \\ \sin(2\gamma_{el}) & -\cos(2\gamma_{el}) \end{pmatrix}\right) \cdot \begin{pmatrix} i_\alpha \\ i_\beta \end{pmatrix}\right) + \frac{d}{dt}\psi_{PM} \begin{pmatrix} \cos(2\gamma_{el}) \\ \sin(2\gamma_{el}) \end{pmatrix}$$

Hierbei sind:

$$\Sigma L = \frac{L_d + L_q}{2} \text{ und } \Delta L = \frac{L_d - L_q}{2},$$

- $L_d$ die Induktivität der elektrischen Maschine in Bezug auf die d-Achse des Rotors (engl. direct axis),
- $L_q$ die Induktivität der elektrischen Maschine in Bezug auf die q-Achse des Rotors (engl. quadrature axis),
- $R$ der Strangwiderstand der elektrischen Maschine,
- $\psi_{PM}$ die Flussverkettung des Rotors auf Grund der Permanentmagnete,
- $\gamma_{el}$ die elektrische Rotorlage (d.h. der elektrische Rotorlagewinkel),
- $u_\alpha$, $u_\beta$ die Statorspannungen in statorfesten $\alpha\beta$-Koordinaten und
- $i_\alpha$, $i_\beta$ die Statorströme in statorfesten $\alpha\beta$-Koordinaten.

Die Strangspannungen und die Strangströme lassen sich in die Statorspannungen und Statorströme in $\alpha\beta$-Koordinaten umrechnen.

Unter Annahme eines kleinen Schätzfehlers $\gamma_{er} = \gamma_{el} - \hat{\gamma}_{el}$ lassen sich die Statorspannungs-Differentialgleichungen in geschätzte $\hat{d}\hat{q}$-Koordinaten transformieren:

$$\begin{pmatrix} u_{\hat{d}} \\ u_{\hat{q}} \end{pmatrix} = R \cdot \begin{pmatrix} i_{\hat{d}} \\ i_{\hat{q}} \end{pmatrix} + \widehat{\omega}_{el} \left( \begin{pmatrix} 0 & -L_q \\ L_d & 0 \end{pmatrix} + \Delta L \begin{pmatrix} -2\gamma_{er} & 0 \\ 0 & 2\gamma_{er} \end{pmatrix} \right) \begin{pmatrix} i_{\hat{d}} \\ i_{\hat{q}} \end{pmatrix}$$

$$+ \frac{d}{dt} \left( \left( \begin{pmatrix} L_d & 0 \\ 0 & L_q \end{pmatrix} + \Delta L \begin{pmatrix} 0 & 2\gamma_{er} \\ 2\gamma_{er} & 0 \end{pmatrix} \right) \begin{pmatrix} i_{\hat{d}} \\ i_{\hat{q}} \end{pmatrix} \right) + \widehat{\omega}_{el} \psi_{PM} \begin{pmatrix} -\gamma_{er} \\ 1 \end{pmatrix}$$

Mit

$$L_{\hat{d}\hat{q}} = \begin{pmatrix} L_d & 0 \\ 0 & L_q \end{pmatrix} + \Delta L \begin{pmatrix} 0 & 2\gamma_{er} \\ 2\gamma_{er} & 0 \end{pmatrix}$$

ergibt sich in Matrix-Vektor-Notation:

$$\vec{u}_{\hat{d}\hat{q}} = R\vec{i}_{\hat{d}\hat{q}} + \widehat{\omega}_{el} \, J \, L_{\hat{d}\hat{q}} \vec{i}_{\hat{d}\hat{q}} + \frac{d}{dt} \left( L_{\hat{d}\hat{q}} \vec{i}_{\hat{d}\hat{q}} \right) + \vec{u}_{EMF,\hat{d}\hat{q}}$$

mit $J = \begin{pmatrix} 0 & -1 \\ 1 & 0 \end{pmatrix}$.

Bei kleinen Drehzahlen sind $\widehat{\omega}_{el}$ und $\omega_{el}$ nahezu Null und die Induktivitätsmatrix $L_{\hat{d}\hat{q}}$ bietet über $\gamma_{er}$ die einzige Möglichkeit zur Rotorlageschätzung. Damit eine zeitliche Ableitung vom Strom eine ausreichende Signalintensität bereitstellt, wird bei kleinen Drehzahlen ein hochfrequentes Testsignal in Form einer hochfrequenten Spannungsanregung der elektrischen Maschine aufgeprägt. Das Aufprägen erfolgt insbesondere in die d-Achse. Aus den hierdurch hervorgerufenen Strömen (insbesondere einem hervorgerufenen d-Strom) lässt sich aus der Ableitung der Ströme anhand der voranstehenden Gleichungen die elektrische Rotorlage $\gamma_{el}$ schätzen.

Die Rotorlage wird hierbei insbesondere mittels eines Beobachters geschätzt. Ein Beobachter ist insbesondere ein regelungstechnischer Beobachter (engl. state observer), der ausgehend von einem Modell der elektrischen Maschine einen Zustand der elektrischen Maschine schätzt. Der geschätzte Zustand der elektrischen Maschine wird mit einem Istzustand der elektrischen Maschine verglichen und bei Abweichungen wird mindestens ein Parameter des Modells so lange angepasst, bis der geschätzte Zustand und der Istzustand wieder übereinstimmen. Der angepasste Parameter ist vorliegend insbesondere die Rotorlage.

In einer Ausführungsform ist vorgesehen, dass beim Schätzen der Strangspannungen eine Totzeitkompensation berücksichtigt wird. Dies erfolgt insbesondere mit einem Verfahren zur Totzeitkompensation, bei dem in dem Wechselrichter aufgrund von Schaltverzugszeiten auftretende Totzeiteffekte mittels der Totzeitkompensation kompensiert werden. Dies erfolgt insbesondere mittels der Steuereinrichtung, insbesondere mittels mindestens eines feldprogrammierbaren Gatterfeldes der Steuereinrichtung. Die Totzeitkompensation versucht, einen Totzeiteffekt zu kompensieren. Der Totzeiteffekt tritt auf, weil es aufgrund von Schaltzeiten von Leistungshalbleitern des (Puls-)Wechselrichters zu einem Abbildungsfehler zwischen einer geschätzten aktuellen Spannung und einer realen Spannung kommt. Zum Kompensieren des Totzeiteffekts werden Schaltflanken von Leistungshalbleitern angepasst, das heißt, hinsichtlich eines Schaltzeitpunkts verschoben. Hierdurch können tatsächlich vorliegende aktuelle Strangspannungen unter Berücksichtigung von den hochfrequent erfassten Strangströmen präzise bestimmt, insbesondere geschätzt werden. Die Totzeitkompensation wird beispielsweise mittels des in B. Weber, T. Brandt and A. Mertens, Compensation of switching deadtime effects in voltage-fed PWM inverters using FPGA-based current oversampling, 2016 IEEE Applied Power Electronics Conference and Exposition (APEC), Long Beach, CA, USA, 2016, S. 3172-3179, doi: 10.1109/APEC.2016.7468318, beschriebenen Verfahrens durchgeführt.

In einer Ausführungsform ist vorgesehen, dass bei einem vorgegebenen Solldrehmoment oberhalb des vorgegebenen Schwellenwertes überprüft wird, ob eine Drehzahl der elektrischen Maschine Null ist, wobei hierzu ein Nullspannungszustand eingestellt wird, und wobei ausgehend von den hochfrequent erfassten Strangströmen bestimmt wird, ob die elektrische Maschine ruht oder nicht. Ein Nullspannungszustand ist insbesondere ein Zustand, in dem alle Stränge der elektrischen Maschine kurzgeschlossen sind. Die Erkennung, ob die elektrische Maschine ruht oder sich bereits in Rotation befindet, entscheidet insbesondere über die Wahl des Verfahrens der geberlosen Regelung. Im Bereich kleiner Drehzahlen (bzw. unterhalb einer vorgegebenen, beispielsweise empirisch bestimmten, Drehzahlschwelle) verwendet man die hochfrequente Anregung und eine hochfrequente Auswertung der Systemantwort. Im Bereich hoher Drehzahlen wird hingegen die Gegenspannung des Rotors, hervorgerufen durch die rotierenden Permanentmagnete, ausgewertet. Durch das initiale Erfassen von Stromsteigungen in den hochfrequent erfassten Strangströmen während der Nullspannungszustände kann erkannt werden, dass sich der Rotor derart langsam dreht, dass das Verfahren mit der hochfrequenten Anregung geeignet ist.

In einer Ausführungsform ist vorgesehen, dass nach dem Einschalten des hochfrequenten Testsignals ein Beobachter der geberlosen Regelung aufsynchronisiert wird. Hierdurch kann eine Rotorlage geschätzt werden, sobald ein Solldrehmoment angefordert wird, das den vorgegebenen Schwellenwert überschreitet.

Weiterbildend ist vorgesehen, dass zum Aufsynchronisieren eine aktuelle Rotorlage bestimmt wird, indem eine aktuelle Lage einer d-Achse durch Einprägen des hochfrequenten Testsignals bestimmt wird, wobei anschließend ein weiteres hochfrequentes Testsignal mit größerer Amplitude unter Berücksichtigung der bestimmten aktuellen Lage aufgeprägt wird, wobei ein Versatz einer Amplitude eines d-Stroms bestimmt wird, wobei eine Richtung der d-Achse ausgehend von dem bestimmten Versatz bestimmt wird, und wobei die drehgeberlose Regelung auf Grundlage der aus der bestimmten Lage und Richtung der d-Achse bestimmten Rotorlage betrieben wird. Da die Induktivitätsmatrix bei mehreren Winkeln gleich ist, ist die Lage mit einer Unsicherheit behaftet. Ist die Induktivitätsmatrix beispielsweise bei einer mechanischen Drehung des Rotors um 90° die gleiche und ist eine Polpaarzahl gleich zwei, so ist eine Unsicherheit beim Bestimmen der Lage d-Achse gleich 180° (= 2x die mechanische Unsicherheit aufgrund der Polpaarzahl). Mittels dieser Ausführungsform kann insbesondere nicht nur eine Lage der d-Achse bestimmt werden, die mit einer im voranstehenden Beispiel 180°-Unsicherheit bezüglich der Richtung behaftet ist, sondern es kann auch die Richtung der d-Achse bestimmt werden. Aus der bestimmten Lage und der bestimmten Richtung wird die aktuelle Rotorlage bestimmt. Hierbei wird insbesondere ausgenutzt, dass die Induktivität $L_d$ abhängig ist vom d-Strom $i_d$. Bei bekannter Abhängigkeit kann aus einem beim Aufprägen des weiteren hochfrequenten Testsignals bestimmten Versatz in der Systemantwort im d-Strom die Richtung der d-Achse bestimmt werden.

In einer Ausführungsform ist vorgesehen, dass das hochfrequente Testsignal und/oder das weitere hochfrequente Testsignal mehrere Frequenzanteile umfassen. Hierdurch kann eine Leistung der einzelnen Frequenzen in den Frequenzanteilen reduziert werden, sodass eine störende Geräuschentwicklung verringert werden kann.

In einer Ausführungsform ist vorgesehen, dass das hochfrequente Testsignal und/oder das weitere hochfrequente Testsignal als breitbandiges Signal ausgebildet sind. Hierdurch kann eine Leistung der einzelnen Frequenzen in dem breitbandigen Signal reduziert werden, sodass eine störende Geräuschentwicklung verringert werden kann.

In einer Ausführungsform ist vorgesehen, dass das hochfrequente Testsignal und/oder das weitere hochfrequente Testsignal als Rauschsignal ausgebildet sind. Hierdurch kann eine Leistung der einzelnen Frequenzen in dem Rauschsignal reduziert werden, sodass eine störende Geräuschentwicklung verringert werden kann.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Ferner wird insbesondere auch ein Fahrzeug geschaffen, umfassend mindestens eine Vorrichtung nach einer der beschriebenen Ausführungsformen. Das Fahrzeug ist insbesondere ein Kraftfahrzeug. Das Fahrzeug kann jedoch auch ein anderes Land-, Schienen-, Wasser-, Luft- oder Raumfahrzeug sein, beispielsweise eine Drohne oder ein Lufttaxi.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Regeln einer elektrischen Maschine;

Fig. 2    eine schematische Darstellung zur Verdeutlichung einer Abhängigkeit der Induktivität vom d-Strom;

Fig. 3    eine schematische Darstellung zur Verdeutlichung einer Abhängigkeit der Induktivität vom q-Strom;

Fig. 4    eine schematische Darstellung des hochfrequenten Testsignals, das in die (geschätzte) d-Achse aufgeprägt wird, und einer Systemantwort des d-Stroms im zeitlichen Verlauf;

Fig. 5    eine schematische Darstellung des weiteren hochfrequenten Testsignals und einer Systemantwort des d-Stroms im zeitlichen Verlauf;

Fig. 6    ein schematisches Ablaufdiagramm einer Ausführungsform des Verfahrens zum Regeln einer elektrischen Maschine.

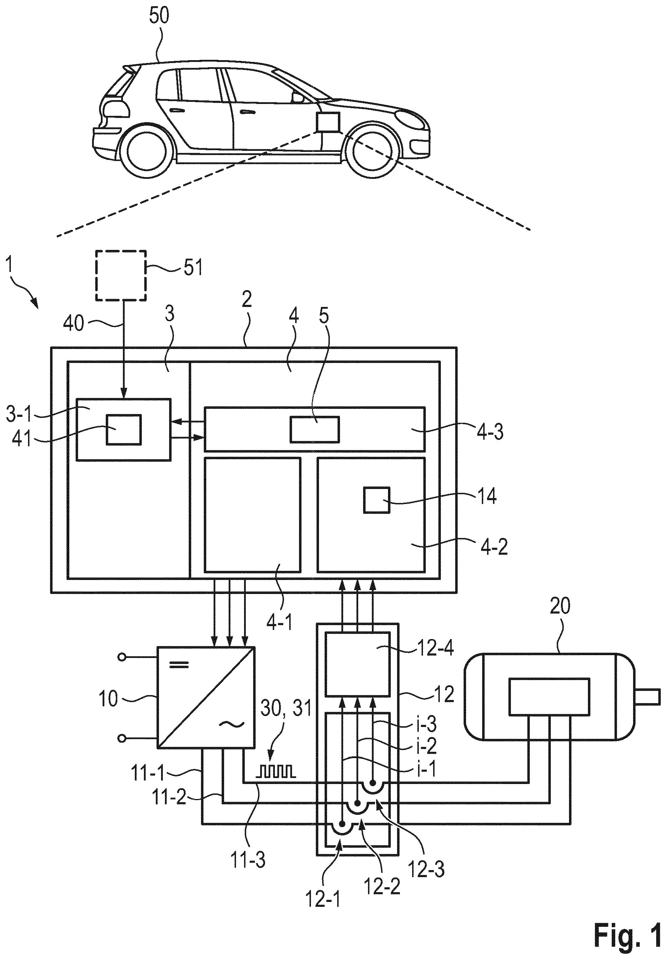

In der Fig. 1 ist eine schematische Darstellung einer Ausführungsform der Vorrichtung 1 zum Regeln einer elektrischen Maschine 20 gezeigt. Die Vorrichtung 1 umfasst eine Steuereinrichtung 2. Die Steuereinrichtung 2 umfasst in der gezeigten Ausführungsform einen Digitalen Signalprozessor 3 und ein feldprogrammierbares Gatterfeld 4. Das feldprogrammierbare Gatterfeld 4 erlaubt eine hochfrequente Signalverarbeitung und Signalauswertung. Der Digitale Signalprozessor 3 und das feldprogrammierbare Gatterfeld 4 sind insbesondere als System-on-Chip-(SoC) ausgebildet. Grundsätzlich kann die Steuereinrichtung 2 zusätzlich oder alternativ aber auch eine andere Form von Recheneinrichtung umfassen, beispielsweise mindestens ein ASIC oder einem Mikroprozessor mit einem Speicher. Die Vorrichtung 1 führt das in dieser Offenbarung beschriebene Verfahren aus, welches nachfolgend anhand der Vorrichtung 1 erläutert wird.

Die Vorrichtung 1 kann beispielsweise in einem Fahrzeug 50 angeordnet sein und dort einer Regelung einer elektrischen Maschine 20 eines Antriebsstrangs dienen.

Das feldprogrammierbare Gatterfeld 4 umfasst insbesondere mehrere Module 4-x, die unterschiedliche Funktionen ausführen, wie nachfolgend erläutert wird.

Gezeigt ist ferner ein Pulswechselrichter 10, der im Beispiel als Zweipunktwechselrichter ausgebildet ist, sowie eine Sensorik 12 zum Erfassen von Strangströmen i-x, umfassend Stromsensoren 12-1, 12-2, 12-3 und einen Analog-Digital-Wandler 12-4. Die Sensorik 12 kann auch Teil der Vorrichtung 1 sein. Weiter ist eine elektrische Maschine 20 gezeigt, die von dem Pulswechselrichter 10 über drei Stränge 11-1, 11-2, 11-3 gespeist wird. Zum Speisen erzeugt der Pulswechselrichter 10 in an sich bekannter Weise ein Drehfeld und wird hierzu von einem Modul 4-1 angesteuert. Insbesondere stellt das Modul 4-1 eine Modulationssteuerung bereit.

Mittels der Sensorik 12 werden die Strangströme i-x der elektrischen Maschine 20 hochfrequent erfasst, von der Steuereinrichtung 2 empfangen und von dem Modul 4-2 verarbeitet. Insbesondere werden die Strangströme i-x überabgetastet mit einer Abtastfrequenz erfasst, die um einen Faktor 10, 100 oder 1000 über einer Modulationsfrequenz des Pulswechselrichters 10 liegt. Insbesondere unter Berücksichtigung einer Totzeitkompensation werden, ebenfalls mittels des Moduls 4-2, zugehörige Strangspannungen unter Berücksichtigung der erfassten Strangströme i-x und der Pulsweitenmodulation bestimmt.

Eine zum Regeln der elektrischen Maschine 20 benötigte Rotorlage 14 wird im Rahmen einer drehgeberlosen Regelung ausgehend von den erfassten Strangströmen i-x geschätzt. Das Schätzen erfolgt beispielsweise mittels des Moduls 4-2.

Hierzu wird mittels des Moduls 4-1 der Pulswechselrichter 10, insbesondere in einem unteren Drehzahlbereich, derart angesteuert, dass dieser ein hochfrequentes Testsignal 30 bezüglich der Strangspannungen durch Modulation erzeugt und aufgeprägt. Hierzu wird der Pulswechselrichter 10 mittels des Moduls 4-1 derart angesteuert, dass eine hochfrequente Schwingung, insbesondere im Bereich von 3 bis 5 kHz oder darüber, beispielsweise mit einer Amplitude von einigen Volt in die d-Achse eingeprägt wird. Hierdurch werden alle drei Stränge 11-x angeregt.

Es kann insbesondere vorgesehen sein, dass ein Beobachter 5 der geberlosen Regelung die Rotorlage 14 der elektrischen Maschine 20 schätzt. Der Beobachter 5 wird beispielsweise mittels des Moduls 4-3 bereitgestellt.

Neben dem Bereitstellen des Beobachters 5 stellt das Modul 4-3 insbesondere auch die geberlose Regelung der elektrischen Maschine 20 bereit, wobei insbesondere mit den Modulen 4-1 und 4-2 zusammen die Regelschleife realisiert wird. Die geschätzte Rotorlage 14 wird beim Regeln der elektrischen Maschine 20 verwendet und hierfür dem Modul 4-3 zugeführt. Insbesondere wird hierbei ein Drehmoment der elektrischen Maschine 20 geregelt.

Es ist vorgesehen, dass ein vorgegebenes Solldrehmoment 40 empfangen und ausgewertet wird. Wird die Vorrichtung 1 in einem Fahrzeug 50 eingesetzt, so wird das Solldrehmoment 40 beispielsweise von einem Fahrer des Fahrzeugs 50 oder, beim teilautomatisierten oder automatisierten Fahren, von einer Fahrzeugsteuerung 51 vorgegeben. Das vorgegebene Solldrehmoment 40 dient insbesondere auch als Führungsgröße beim Regeln der elektrischen Maschine 20.

Ausgehend von einem Auswertungsergebnis ist vorgesehen, dass das hochfrequente Testsignal 30 abgeschaltet wird, wenn das vorgegebene Solldrehmoment 40 einen vorgegebenen Schwellenwert 41 erreicht oder unterschreitet. Ferner ist vorgesehen, dass das hochfrequente Testsignal 30 eingeschaltet wird, wenn das vorgegebene Solldrehmoment 40 den vorgegebenen Schwellenwert 41 überschreitet.

Es kann vorgesehen sein, dass bei einem vorgegebenen Solldrehmoment 40 oberhalb des vorgegebenen Schwellenwertes 41 überprüft wird, ob eine Drehzahl der elektrischen Maschine 20 Null ist, wobei hierzu ein Nullspannungszustand eingestellt wird, und wobei ausgehend von den hochfrequent erfassten Strangströmen i-x bestimmt wird, ob die elektrische Maschine 20 ruht oder nicht. Beim Nullspannungszustand werden die Stränge 11-x der elektrischen Maschine 20 insbesondere kurzgeschlossen. Rotiert ein Rotor noch, werden Ströme induziert, welche hochfrequent erfasst und ausgewertet werden können. Das Überprüfen erfolgt beispielsweise in einem Modul 3-1.

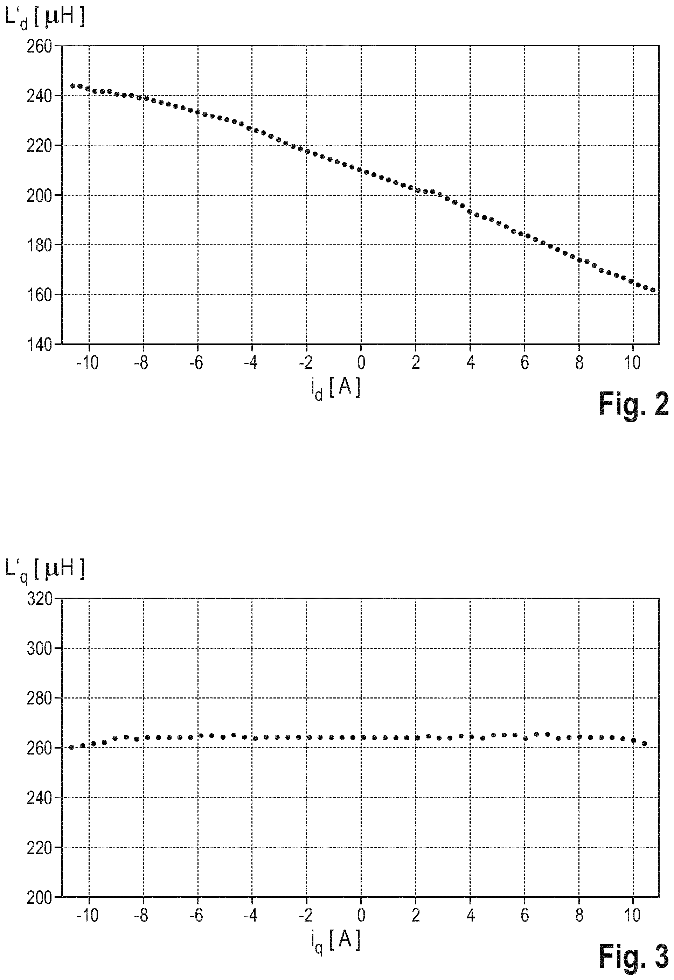

Weiterbildend kann vorgesehen sein, dass zum Aufsynchronisieren eine aktuelle Rotorlage 14 bestimmt wird, indem eine aktuelle Lage einer d-Achse durch Einprägen des hochfrequenten Testsignals 30 bestimmt wird, wobei anschließend ein weiteres hochfrequentes Testsignal 31 mit größerer Amplitude unter Berücksichtigung der bestimmten aktuellen Lage aufgeprägt wird, wobei ein Versatz 35 einer Amplitude eines d-Stroms bestimmt wird, wobei eine Richtung der d-Achse ausgehend von dem bestimmten Versatz 35 bestimmt wird, und wobei die drehgeberlose Regelung auf Grundlage der aus der bestimmten Lage und Richtung der d-Achse bestimmten Rotorlage 14 betrieben wird. Diese Ausführungsform wird anhand der Figuren 2, 3, 4 und 5 näher erläutert.

Die Fig. 2 zeigt eine schematische Darstellung zur Verdeutlichung einer Abhängigkeit der Induktivität $L_d$ von dem d-Strom $i_d$. Eine Steigung ist hierbei negativ. In Fig. 3 ist eine schematische Darstellung zur Verdeutlichung einer Abhängigkeit der Induktivität $L_q$ von dem Strom $i_q$.

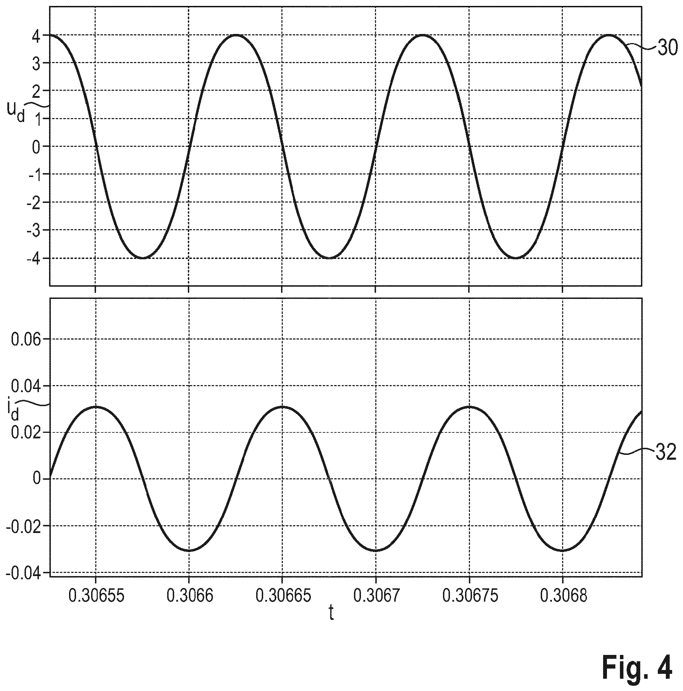

In der Fig. 4 ist eine schematische Darstellung des hochfrequenten Testsignals 30, das in die (geschätzte) d-Achse aufgeprägt wird, und einer resultierenden Systemantwort 32 des d-Stroms $i_d$ im zeitlichen Verlauf gezeigt. Auf der x-Achse ist die Zeit t in Sekunden dargestellt, auf einer y-Achse oben eine d-Spannung $u_d$ in Volt und der d-Strom $i_d$ in A. Eine Frequenz des hochfrequenten Testsignals beträgt beispielsweise ~32 kHz. Eine Amplitude des hochfrequenten Testsignals 30 ist mit 4 V zu klein, als dass ein Effekt der d-stromabhängigen Induktivität $L_d$ (vgl. Fig. 2) in der Systemantwort 32 sichtbar wäre. Die Maxima und Minima in der Systemantwort 32 sind daher betragsmäßig gleich (ca. 30 mA). Mit Hilfe dieses Testsignals 30 kann die Lage der d-Achse bestimmt werden. Aufgrund der winkelsymmetrischen Eigenschaften der Induktivitätsmatrix ist die Lage jedoch mit einer Unsicherheit behaftet.

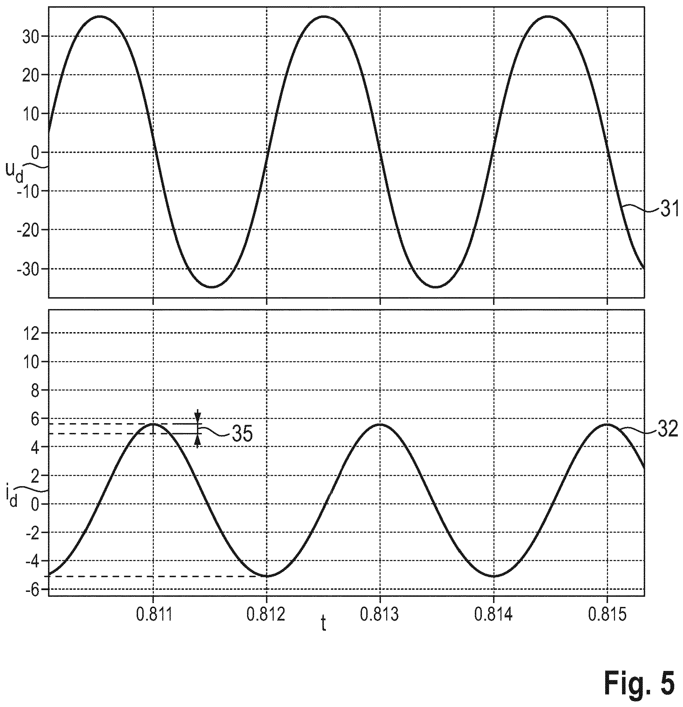

Um auch die Richtung der d-Achse zu bestimmen, ist eine Amplitude des Testsignals 30 zu klein. Die Amplitude muss daher erhöht werden, um einen Effekt der d-stromabhängigen Induktivität $L_d$ beobachten zu können und hieraus die Richtung der d-Achse bestimmen zu können. In der Fig. 5 ist eine schematische Darstellung des weiteren hochfrequenten Testsignals 31 und einer Systemantwort 32 des d-Stroms $i_d$ im zeitlichen Verlauf gezeigt. Eine Amplitude des weiteren Testsignals 31 ist hierbei deutlich erhöht (auf ca. 35 V), eine Frequenz ist hingegen verringert auf ~3 kHz. Die Frequenz wird beim weiteren Testsignal abgesenkt, da ansonsten bei ~32 kHz auf Grund des induktiven Verhaltens der elektrischen Maschine eine deutlich zu große Amplitude der hochfrequenten Anregung gestellt werden müsste. Das weitere Testsignal wird auch nur für einen kurzen Zeitraum für die Identifikation der Richtung (bzw. der 180°-Unsicherheit) der d-Achse eingeprägt. In der Systemantwort 32 des d-Stroms $i_d$ ist ein Versatz 35 zu erkennen, da Maxima und Minima betragsmäßig nicht mehr gleich sind. Der Versatz 35 ist ein Resultat der d-stromabhängigen Induktivität $L_d$ (vgl. Fig. 2). Die Richtung, in der der Versatz 35 auftritt, ist die Richtung der Flussverkettung. Tritt der Versatz 35 also bei den Maxima auf, so weist die bereits bestimmte Lage die richtige Richtung auf (wie in Fig. 5 beispielhaft dargestellt). Tritt der Versatz 35 hingegen bei den Minima auf (nicht gezeigt), so weist die bestimmte Lage einen Fehler auf, beispielsweise von (elektrisch) 180° (bei einer Winkelsymmetrie der Induktivitätsmatrix von mechanisch 90° und aufgrund einer Polpaarzahl von zwei), sodass die geschätzte Rotorlage 14 (Fig. 1) um diesen Fehler korrigiert werden muss (im Beispiel wird ein Winkel von 180° hinzuaddiert), um die korrekte Richtung zu erhalten. Anders ausgedrückt muss die geschätzte Rotorlage 14 korrigiert werden, wenn die Minima betragsmäßig größer sind als die Maxima. Sind hingegen die Maxima betragsmäßig größer als die Minima, weist die Lage bereits die richtige Richtung auf und es muss keine Korrektur erfolgen. Anschließend wird insbesondere wieder das hochfrequente Testsignal 30 mit der kleineren Amplitude verwendet, um die Rotorlage 14 fortlaufend weiter zu schätzen.

Es kann vorgesehen sein, dass das hochfrequente Testsignal 30 und/oder das weitere hochfrequente Testsignal 31 mehrere Frequenzanteile umfassen.

Es kann ferner vorgesehen sein, dass das hochfrequente Testsignal 30 und/oder das weitere hochfrequente Testsignal 31 als breitbandiges Signal ausgebildet sind.

Weiter kann vorgesehen sein, dass das hochfrequente Testsignal 30 und/oder das weitere hochfrequente Testsignal 31 als Rauschsignal ausgebildet sind.

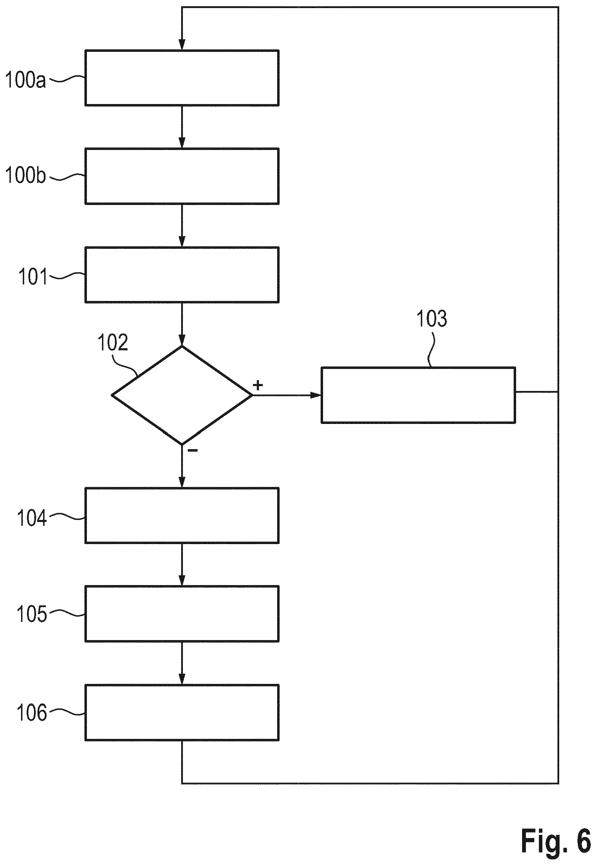

In Fig. 6 ist ein schematisches Ablaufdiagramm einer Ausführungsform des Verfahrens zum Regeln einer elektrischen Maschine gezeigt.

In Maßnahme 100a werden Strangströme hochfrequent, insbesondere überabgetastet, mittels mittels Stromsensoren an Strängen der elektrischen Maschine erfasst.

In einer Maßnahme 100b werden Strangspannungen ausgehend von den erfassten Strangströmen und einer Pulsweitenmodulation des (Puls-)Wechselrichters hochfrequent geschätzt, insbesondere unter Verwendung einer Totzeitkompensation.

In einer Maßnahme 101 wird ein vorgegebenes Solldrehmoment, beispielsweise von einem Fahrer eines Fahrzeugs, oder beim teilautomatisierten oder automatisierten Fahren von einer Fahrzeugsteuerung, empfangen.

In einer Maßnahme 102 wird das empfangene Solldrehmoment ausgewertet, wobei hierzu überprüft wird, ob das vorgegebene Solldrehmoment einen vorgegebenen Schwellenwert erreicht oder unterschreitet.

Ist dies der Fall, so wird in einer Maßnahme 103 ein hochfrequentes Testsignal, das insbesondere in einem unteren Drehzahlbereich der elektrischen Maschine, zum Bestimmen einer für die Regelung benötigten Rotorlage der elektrischen Maschine verwendet wird, abgeschaltet bzw. bleibt abgeschaltet.

Ist dies hingegen nicht der Fall, so wird in einer Maßnahme 104 das hochfrequente Testsignal eingeschaltet bzw. so bleibt das hochfrequente Testsignal eingeschaltet.

In einer Maßnahme 105 wird in dem unteren Drehzahlbereich der elektrischen Maschine zum Bestimmen der für die Regelung benötigten Rotorlage der elektrischen Maschine das hochfrequente Testsignal aufgeprägt und eine Systemantwort ausgewertet.

In einer Maßnahme 106 wird die elektrische Maschine mittels einer drehgeberlosen Regelung ausgehend von der bestimmten Rotorlage geregelt.

Es kann vorgesehen sein, dass bei einem vorgegebenen Solldrehmoment oberhalb des vorgegebenen Schwellenwertes in Maßnahme 104 überprüft wird, ob eine Drehzahl der elektrischen Maschine Null ist, wobei hierzu ein Nullspannungszustand eingestellt wird, und wobei ausgehend von den hochfrequent erfassten Strangströmen bestimmt wird, ob die elektrische Maschine ruht oder nicht.

Insbesondere ist vorgesehen, dass nach dem Einschalten des hochfrequenten Testsignals in Maßnahme 104 ein Beobachter der geberlosen Regelung aufsynchronisiert wird.

Hierbei ist insbesondere vorgesehen, dass zum Aufsynchronisieren eine aktuelle Rotorlage bestimmt wird, indem eine aktuelle Lage einer d-Achse durch Einprägen des hochfrequenten Testsignals bestimmt wird, wobei anschließend ein weiteres hochfrequentes Testsignal mit größerer Amplitude unter Berücksichtigung der bestimmten aktuellen Lage aufgeprägt wird, wobei ein Versatz einer Amplitude eines d-Stroms bestimmt wird, wobei eine Richtung der d-Achse ausgehend von dem bestimmten Versatz bestimmt wird, und wobei die drehgeberlose Regelung auf Grundlage der aus der bestimmten Lage und Richtung der d-Achse bestimmten Rotorlage betrieben wird.

**Bezugszeichenliste**

| | |
|---|---|
| 1 | Vorrichtung |
| 2 | Steuereinrichtung |
| 3 | Digitaler Signalprozessor |
| 3-x | Modul |
| 4 | feldprogrammierbares Gatterfeld |
| 4-x | Modul |
| 5 | Beobachter |
| 10 | (Puls-)Wechselrichter |
| 11-x | Strang |
| 12 | Sensorik |
| 12-x | Stromsensor |
| 12-4 | Analog-Digital-Wandler |
| 14 | Rotorlage |
| 20 | elektrische Maschine |
| 30 | hochfrequentes Testsignal |
| 31 | weiteres hochfrequentes Testsignal |
| 32 | Systemantwort |
| 35 | Versatz |
| 40 | Solldrehmoment |
| 41 | Schwellenwert |
| 50 | Fahrzeug |
| 51 | Fahrzeugsteuerung |
| 100-106 | Maßnahmen des Verfahrens |
| i-x | Strangstrom |
| $i_d$ | d-Strom |
| $i_q$ | q-Strom |
| $L_d$ | Induktivität (d-Achse) |
| $L_q$ | Induktivität (q-Achse) |
| $u_d$ | d-Spannung |

**Patentansprüche**

1.  Verfahren zum Regeln einer elektrischen Maschine (20),

    wobei die elektrische Maschine (20) mittels eines Wechselrichters (10) gespeist und mittels einer drehgeberlosen Regelung geregelt wird,
    wobei hierzu Strangströme (i-x) hochfrequent erfasst werden, und
    wobei Strangspannungen hochfrequent geschätzt werden,
    wobei zum Bestimmen einer für die Regelung benötigten Rotorlage (14) der elektrischen Maschine (20) ein hochfrequentes Testsignal (30) aufgeprägt und eine Systemantwort (32) ausgewertet wird,
    **dadurch gekennzeichnet, dass** ein vorgegebenes Solldrehmoment (40) empfangen und ausgewertet wird, und wobei das hochfrequente Testsignal (30) abgeschaltet wird, wenn das vorgegebene Solldrehmoment (40) einen vorgegebenen Schwellenwert (41) erreicht oder unterschreitet, und wobei das hochfrequente Testsignal (30) eingeschaltet wird, wenn das vorgegebene Solldrehmoment (40) den vorgegebenen Schwellenwert (41) überschreitet.

**2.** Verfahren nach Anspruch 1, **dadurch gekennzeichnet, dass** beim Schätzen der Strangspannungen eine Totzeitkompensation berücksichtigt wird.

**3.** Verfahren nach Anspruch 1 oder 2, **dadurch gekennzeichnet, dass** bei einem vorgegebenen Solldrehmoment (40) oberhalb des vorgegebenen Schwellenwertes (41) überprüft wird, ob eine Drehzahl der elektrischen Maschine (20) Null ist, wobei hierzu ein Nullspannungszustand eingestellt wird, und wobei ausgehend von den hochfrequent erfassten Strangströmen (i-x) bestimmt wird, ob die elektrische Maschine (20) ruht oder nicht.

**4.** Verfahren nach einem der vorangegangenen Ansprüche, **dadurch gekennzeichnet, dass** nach dem Einschalten des hochfrequenten Testsignals (30) ein Beobachter (5) der geberlosen Regelung aufsynchronisiert wird.

**5.** Verfahren nach Anspruch 4, **dadurch gekennzeichnet, dass** zum Aufsynchronisieren eine aktuelle Rotorlage (14) bestimmt wird, indem eine aktuelle Lage einer d-Achse durch Einprägen des hochfrequenten Testsignals (30) bestimmt wird, wobei anschließend ein weiteres hochfrequentes Testsignal (31) mit größerer Amplitude unter Berücksichtigung der bestimmten aktuellen Lage aufgeprägt wird, wobei ein Versatz (35) einer Amplitude eines d-Stroms bestimmt wird, wobei eine Richtung der d-Achse ausgehend von dem bestimmten Versatz (35) bestimmt wird, und wobei die drehgeberlose Regelung auf Grundlage der aus der bestimmten Lage und Richtung der d-Achse bestimmten Rotorlage (14) betrieben wird.

**6.** Verfahren nach einem der vorangegangenen Ansprüche, **dadurch gekennzeichnet, dass** das hochfrequente Testsignal (30) und/oder das weitere hochfrequente Testsignal (31) mehrere Frequenzanteile umfassen.

**7.** Verfahren nach einem der vorangegangenen Ansprüche, **dadurch gekennzeichnet, dass** das hochfrequente Testsignal (30) und/oder das weitere hochfrequente Testsignal (31) als breitbandiges Signal ausgebildet sind.

**8.** Verfahren nach einem der vorangegangenen Ansprüche, **dadurch gekennzeichnet, dass** das hochfrequente Testsignal (30) und/oder das weitere hochfrequente Testsignal (31) als Rauschsignal ausgebildet sind.

**9.** Vorrichtung (1) zum Regeln einer elektrischen Maschine (20), umfassend

eine Steuereinrichtung (2), wobei die Steuereinrichtung (2) dazu eingerichtet ist, einen die elektrische Maschine (20) speisenden Wechselrichter (10) anzusteuern und die elektrische Maschine (20) mittels einer drehgeberlosen Regelung zu regeln und hierzu hochfrequent erfasste Strangströme (i-x) zu empfangen und Strangspannungen hochfrequent zu schätzen, und
zum Bestimmen einer für die Regelung benötigten Rotorlage (14) der elektrischen Maschine (20) ein hochfrequentes Testsignal (30) aufzuprägen und eine Systemantwort (32) auszuwerten,
**dadurch gekennzeichnet, dass** die Steuereinrichtung (2) dazu eingerichtet ist,
ein vorgegebenes Solldrehmoment (40) zu empfangen und auszuwerten, und das hochfrequente Testsignal (30) abzuschalten, wenn das vorgegebene Solldrehmoment (40) einen vorgegebenen Schwellenwert (41) erreicht oder unterschreitet, und das hochfrequente Testsignal (30) einzuschalten, wenn das vorgegebene Solldrehmoment (40) den vorgegebenen Schwellenwert (40) überschreitet.

**10.** Fahrzeug (50), umfassend mindestens eine Vorrichtung (1) nach Anspruch 9.

**Claims**

**1.** Method for controlling an electric machine (20),

the electric machine (20) being powered by means of an inverter (10) and being controlled by means of control without a rotary encoder,
phase currents (i-x) being detected at high frequency for this purpose, and
phase voltages being estimated at high frequency,
a high-frequency test signal (30) being applied and a system response (32) being evaluated, in order to determine a rotor position (14) of the electric machine (20) required for the control,
**characterized in that** a specified target torque (40) is received and evaluated, the high-frequency test signal (30) being switched off when the specified target torque (40) reaches or falls below a specified threshold value (41), and the high-frequency test signal (30) being switched on when the specified target torque (40) exceeds the specified threshold value (41).

2. Method according to claim 1, **characterized in that** dead-time compensation is taken into account when estimating the phase voltages.

3. Method according to claim 1 or claim 2, **characterized in that,** at a specified target torque (40) above the specified threshold value (41), it is checked whether a rotational speed of the electric machine (20) is zero, a zero voltage state being set for this purpose, and it being determined whether the electric machine (20) is at rest or not, on the basis of the phase currents (i-x) detected at high frequency.

4. Method according to any of the preceding claims, **characterized in that,** after switching on the high-frequency test signal (30), a state observer (5) of the control without an encoder is synchronized.

5. Method according to claim 4, **characterized in that,** for the purpose of synchronization, a current rotor position (14) is determined by determining a current position of a d-axis by applying the high-frequency test signal (30), a further high-frequency test signal (31) having a larger amplitude being subsequently applied, taking into account the determined current position, an offset (35) of an amplitude of a d-current being determined, a direction of the d-axis being determined on the basis of the determined offset (35), and the control without a rotary encoder being carried out on the basis of the rotor position (14) determined from the determined position and direction of the d-axis.

6. Method according to any of the preceding claims, **characterized in that** the high-frequency test signal (30) and/or the further high-frequency test signal (31) comprise a plurality of frequency components.

7. Method according to any of the preceding claims, **characterized in that** the high-frequency test signal (30) and/or the further high-frequency test signal (31) is a broadband signal.

8. Method according to any of the preceding claims, **characterized in that** the high-frequency test signal (30) and/or the further high-frequency test signal (31) is a noise signal.

9. Apparatus (1) for controlling an electric machine (20), comprising

a control device (2), the control device (2) being designed to actuate an inverter (10) powering the electric machine (20) and to control the electric machine (20) by means of control without a rotary encoder and, for this purpose, to receive phase currents (i-x) detected at high frequency and to estimate phase voltages at high frequency, and
to apply a high-frequency test signal (30) and evaluate a system response (32) in order to determine a rotor position (14) of the electric machine (20) required for the control,
**characterized in that** the control device (2) is designed to receive and evaluate a specified target torque (40), and to switch off the high-frequency test signal (30) when the specified target torque (40) reaches or falls below a specified threshold value (41), and to switch on the high-frequency test signal (30) when the specified target torque (40) exceeds the predetermined threshold value (40).

10. Vehicle (50), comprising at least one apparatus (1) according to claim 9.

**Revendications**

1. Procédé de régulation d'une machine électrique (20),

dans lequel la machine électrique (20) est alimentée par le biais d'un onduleur (10) et régulée par le biais d'une régulation sans codeur,
dans lequel des courants de branche (i-x) sont détectés à haute fréquence à cet effet, et
dans lequel des tensions de branche sont estimées à haute fréquence,
dans lequel un signal de test (30) à haute fréquence est appliqué à la machine électrique (20) pour déterminer une position (14) de rotor nécessaire pour la régulation et une réponse (32) de système est évaluée,
**caractérisé en ce qu'**un couple de consigne (40) prédéfini est reçu et évalué, et dans lequel le signal de test (30) à haute fréquence est désactivé lorsque le couple de consigne (40) prédéfini atteint ou passe en dessous d'une valeur seuil (41) prédéfinie, et dans lequel le signal de test (30) à haute fréquence est activé lorsque le couple de consigne (40) prédéfini passe au-dessus de la valeur seuil (41) prédéfinie.

2. Procédé selon la revendication 1, **caractérisé en ce qu'**une compensation de temps morts est prise en compte lors de l'estimation des tensions de branche.

3. Procédé selon la revendication 1 ou 2, **caractérisé en ce que,** pour un couple de consigne (40) prédéfini supérieur à la valeur seuil (41) prédéfinie, on vérifie si une vitesse de rotation de la machine électrique (20) est nulle, dans lequel un état de tension nulle est réglé à cet effet, et dans lequel on détermine, à partir des courants de branche (i-x) détectés à haute fréquence, si la machine électrique (20) est au repos ou non.

4. Procédé selon l'une des revendications précédentes, **caractérisé en ce qu'**un observateur (5) de la régulation sans codeur est synchronisé après l'activation du signal de test (30) à haute fréquence.

5. Procédé selon la revendication 4, **caractérisé en ce que** pour la synchronisation, une position (14) de rotor actuelle est déterminée en déterminant une position actuelle d'un axe d par l'application du signal de test (30) à haute fréquence, dans lequel un autre signal de test (31) à haute fréquence de plus grande amplitude est ensuite appliqué en tenant compte de la position actuelle déterminée, dans lequel un décalage (35) d'une amplitude d'un courant d est déterminé, dans lequel une direction de l'axe d est déterminée à partir du décalage (35) déterminé, et dans lequel la régulation sans codeur est exploitée sur la base de la position (14) de rotor déterminée à partir de la position et de la direction d'axe d déterminées.

6. Procédé selon l'une des revendications précédentes, **caractérisé en ce que** le signal de test (30) à haute fréquence et/ou l'autre signal de test (31) à haute fréquence comprennent plusieurs composantes de fréquence.

7. Procédé selon l'une des revendications précédentes, **caractérisé en ce que** le signal de test (30) à haute fréquence et/ou l'autre signal de test (31) à haute fréquence sont conçus comme un signal à large bande.

8. Procédé selon l'une des revendications précédentes, **caractérisé en ce que** le signal de test (30) à haute fréquence et/ou l'autre signal de test (31) à haute fréquence sont conçus comme un signal de bruit.

9. Dispositif (1) de régulation d'une machine électrique (20), comprenant

un dispositif de commande (2), dans lequel le dispositif de commande (2) est conçu pour commander un onduleur (10) alimentant la machine électrique (20) et pour réguler la machine électrique (20) par le biais d'une régulation sans codeur et, à cet effet, pour recevoir des courants de branche (i-x) détectés à haute fréquence et pour estimer des tensions de branche à haute fréquence, et
pour appliquer un signal de test (30) à haute fréquence pour déterminer une position (14) de rotor de la machine électrique (20) nécessaire pour la régulation et pour évaluer une réponse (32) de système,
**caractérisé en ce que** le dispositif de commande (2) est conçu pour recevoir et évaluer un couple de consigne (40) prédéfini, et pour désactiver le signal de test (30) à haute fréquence lorsque le couple de consigne (40) prédéfini atteint ou passe en dessous d'une valeur seuil (41) prédéfinie, et pour activer le signal de test (30) à haute fréquence lorsque le couple de consigne (40) prédéfini passe au-dessus de la valeur seuil (40) prédéfinie.

10. Véhicule (50), comprenant au moins un dispositif (1) selon la revendication 9.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200099323 A1
- DE 102016201746 A1

- EP 2538547 A1

**In der Beschreibung aufgeführte Nicht-Patentliteratur**

- **G. LINDEMANN et al.** Reducing the Low-Speed Limit for Back-EMF Based Self-Sensing Speed Control by Using an FPGA-Operated Dead-Time Compensation. *2018 IEEE 9th International Symposium on Sensorless Control for Electrical Drives (SLED)*, September 2018

- **B. WEBER** ; **T. BRANDT** ; **A. MERTENS**. Compensation of switching dead-time effects in voltage-fed PWM inverters using FPGA-based current oversampling. *2016 IEEE Applied Power Electronics Conference and Exposition (APEC)*, 2016, 3172-3179
- **BASTIAN WEBER**. *Positionsgeberlose Regelung von permanentmagneterregten Synchronmaschinen bei kleinen Drehzahlen mit überabtastender Stromerfassung*, 2018, vol. 163, https://doi.org/10.15488/9140